Europäisches Patentamt

**European Patent Office**

Office européen des brevets

(19)

(11) Publication number: **0 202 088**
**B1**

(12) **EUROPEAN PATENT SPECIFICATION**

(45) Date of publication of the patent specification:
**14.11.90**

(51) Int. Cl.⁵: **G03G 15/32**

(21) Application number: **86303569.7**

(22) Date of filing: **12.05.86**

(54) **Discrete optical image bars having enhanced spatial addressing capacity.**

(30) Priority: **13.05.85 US 733354**

(43) Date of publication of application:
**20.11.86 Bulletin 86/47**

(45) Publication of the grant of the patent:
**14.11.90 Bulletin 90/46**

(84) Designated Contracting States:
**DE FR GB**

(56) References cited:
**EP-A- 0 093 583**
**GB-A- 2 138 162**
**US-A- 4 361 394**
**US-A- 4 492 435**
**US-A- 4 493 549**
**US-A- 4 509 058**

(73) Proprietor: **XEROX CORPORATION, Xerox Square - 020, Rochester New York 14644(US)**

(72) Inventor: **Hecht, David L., 371 Linfield Drive, Menlo Park California 94025(US)**

(74) Representative: **Goode, Ian Roy et al, Rank Xerox Limited Patent Department 364 Euston Road, London NW1 3BL(GB)**

## Description

This invention relates to discrete optical image bars and, more particularly, to an imaging apparatus of the kind including a discrete optical bar for sequentially generating a plurality of independent pixel patterns and for serially superimposing said pixel patterns on an output image plane each of said pixel patterns containing a plurality of pixels which are spatially distributed generally uniformly on said image plane on respective laterally displaced centres.

As a matter of definition, an "optical image bar" comprises an array of optical picture element ("pixel") generators for converting a spatial pattern, which usually is represented by the information content of electrical input signals, into a corresponding optical intensity profile. Although there are a variety of applications for such devices in a number of different fields, a significant portion of the effort and expense that have been devoted to their development has been directed toward their application to electrophotographic printing, where they may prove to be a relatively low cost and reliable alternative to the flying spot raster scanners which have dominated that field since its inception. Another potentially important application for these images bars is in displays, although that possibility has received relatively little attention to date.

Several different types of images bars have been proposed, including electrically addressable LED arrays (see "Linear LED Array Has 300/Pixel/In. Resolution,"Electronics Week, January 21, 1985, p. 21), electro-mechanical spatial light modulators (see a commonly assigned United States Patent No. 4 492 435 of M E Banton et al., which issued January 8, 1985 on a "Multiple Array Full Width Electro Mechanical Modulator"), and electrooptic spatial light modulators (see another commonly assigned United States Patent No. 4 281 904 of R A Sprague et al., which issued August 4, 1981 on a "TIR Electro-Optic Modulator with individually Addressable Electrodes"). Also see, "Light Gates Give Data Recorder Improved Hardcopy Resolution," Electronic Design, July 19, 1979, pp. 31-32; "Polarizing Filters Plot Analog Waveforms," Machine Design, Vol. 51, No. 17, July 26, 1979, p.62; and "Data Recorder Eliminates Problem of Linearity," Design News, February 4, 1980, pp. 56-57. Even though these image bars are based on diverse technologies, they share the common characteristic of having finite spatial addressing capacities (i.e. they are "discrete image bars") because there are only certain, predetermined coordinates ("addresses") in image space upon which they can centre pixels. In other words, the image plane "footprint" of each of these image bars envelopes a continuum of space, but the centres of the pixels are confined to certain discrete locations therein due to the image bar's lack of capacity to address any other locations within that space. For example, the addresses upon which pixels can be centered by a discrete linear image bar are laterally restricted. As a result of this restriction, the precision with which such image bars can locate pixels in an image plane is limited by spatial quantization errors, so they tend to introduce unwanted spatial distortion into the image. Furthermore, if the image plane diameter of the individual pixels is less than their centre-to-centre displacement, the restricted addressing capacity of these image bars also causes interpixel intensity nulls.

Some of the more interesting image bar proposals are based on the use of TIR (total internal reflection) electrooptic spatial light modulators. In keeping with the teachings of a commonly assigned United States Patent No. 4 396 252 of W D Turner, which issued August 2, 1983 on "Proximity Coupled Electro-Optic Devices," such a modulator typically comprises a set of laterally separated, individually addressable electrodes which are maintained closely adjacent a reflective surface of an optically transparent electrooptic element, such as a lithium niobate crystal. In operation, substantially the full width of the electrooptic element is illuminated by a transversely collimated light beam. This light beam is applied to the electrooptic element at a near grazing angle of incidence with respect to its reflective surface and is brought to a wedge shaped focus on that surface, so that it is totally internally reflected therefrom. Moreover, voltages representing laterally adjacent pixels (i.e. a linear pixel pattern) are applied to the individually addressable electrodes, whereby localized fringe electric fields are coupled into the electrooptic element. These fields produce localized variations in the refractive index of the electrooptic element, so that the wavefront of the light beam is spatially phase modulated in accordance with the pixel pattern as it passes through the electrooptic element. The process is repeated for a sequence of pixel patterns, with the result that the wavefront of the light beam is spatially modulated as a function of time in accordance with successive ones of those patterns. For image bar applications of such a modulator, Schlieren optics are employed to convert the phase modulated wavefront of the light beam into a corresponding series of optical intensity profiles. If a printing function is being performed, these intensity profiles are, in turn, used to expose a photosensitive recording medium, such as a xerographic photoreceptor, in accordance with the image defined by the successive pixel patterns.

There have been several significant developments which have reduced the cost and increased the reliability of TIR electrooptic image bars. Among these are a so-called "differential encoding" technique that is described in a commonly assigned United States Patent No. 4 450 459 of W D Turner et al, which issued May 22, 1984 on "Differential Encoding for Fringe Field Responsive Electro-Optic Line Printers" and an electrical interconnect strategy that is described in a commonly assigned United States Patent No. 4 367 925 of R A Spaue et al, which issued January 11, 1983 on "Integrated Electronics for Proximity Coupled Electro-Optic Devices." Briefly, it has been shown that the number of electrodes that a TIR electrooptic image bar requires to achieve a given resolution can be reduced by a factor of almost two if the input data samples (i.e., the electrical representations of the pixels to be printed) are differentially encoded, such that the magnitude of each of them, except for those that represent the initial pixels for the successive lines of the image, is referenced to the magnitude of the immediately preceding sample. Additionally, it has been demonstrated that more or less conventional VLSI circuit technology may be employed to integrate the electrodes with their addressing and drive electronics, thereby promoting the orderly and reliable distribution of data samples to the large number of electrodes that ordinarily are required for reasonably high resolution printing.

Typically, the effective diameter of the pixels produced by an electrooptic image bar, as measured between their half power points at unity magnification, is approximately one half their centre-to-centre spacing. Accordingly, such image bars not only tend to cause image distortion because of spatial quantization errors, but also characteristically produce interpixel intensity nulls. A commonly assigned United States Patent No. 4 483 596 of S W Marshall, which issued November 20, 1984 on "Interference Suppression Apparatus and Method for a Linear Modulator," discloses a technique for avoiding the destructive interference that can cause interpixel intensity nulls when using electrooptic image bars, but that proposal does not enhance the spatial addressing capacity of the image bar. Another commonly assigned United States Patent No. 4 509 058 of K H Fischbeck, which issued April 2, 1985 on "Ink Jet Printing Using Horizontal Interlacing" broadly addresses the basic problem of increasing the spatial addressing capacity of a print head having a linear array of discrete printing elements, but the teachings of that patent do not account for the environment in which optical image bars operate.

The present invention is intended to increase the spatial addressing capacity of a discrete optical image bar, and provides an imaging apparatus of the kind specified which is characterised by means coupled to said image bar for sequentially shifting successive ones of said pixel pattern laterally relative to said image plane while maintaining said image bar in a fixed lateral position with respect to said image plane, each of said pixel patterns having the centres of its pixels laterally offset on said image plane with respect to the centres of the pixels of any immediately preceeding and immediately succeeding pixel patterns by a distance that is less than the lateral displacement of the centres of the pixels of any one of said pixel patterns, whereby spatially adjacent pixel patterns are laterally interlaced while being mapped onto said image plane to increase the spatial addressing capacity of said image bar.

A variety of techniques, some of which are dependant on the construction of the image bar and others of which are not, may be employed for laterally shifting the footprint of the image bar with respect to the image plane in timed synchronism with the generation of successive pixel patterns. For example, one of the more universally applicable approaches is to locate an optical image deflector, such as a rotatably supported mirror, between the image bar and the image plane for laterally translating the image plane footprint of the image bar back and forth through an appropriate offset distance at a predetermined synchronous rate.

For line printers and the like, where a photosensitive recording medium is advanced in a sagittal, cross-line direction relative to the image bar while being exposed to successive pixel patterns, it sometimes is desirable to shift the footprint of the image bar back and forth through a predetermined acute angle with respect to the cross-line direction, thereby providing a lateral component of motion for increasing the spatial addressing capacity of the image bar and a sagittal component of motion for partially or completely compensating for the cross-line motion of the recording medium. To accomplish that while using a reflective optical deflector to carry out the present invention, the axis of rotation of the deflector may be tilted at an appropriate complementary angle.

Still other features and advantages of this invention will become apparent when the following detailed description is read in conjunction with the attached drawings, in which:

Figure 1 is a schematic sagittal plane view of a line printer comprising a discrete electrooptic image bar;

Figure 2 is a schematic tangential plane view of the printer shown in Figure 1;

Figure 3 is a partially cut-away, enlarged bottom view of the spatial light modulator for the printer shown in Figures 1 and 2;

Figure 4 is a simplified block diagram of a system for applying differentially encoded input data samples to the electrodes of the modulator shown in Figure 3;

Figure 5 is a simplified tangential plane view of an illustrative embodiment of the present invention as applied to a folded optical path implementation of the line printer shown in Figures 1 and 2;

Figure 6 is a simplified sagittal plane view of the embodiment shown in Figure 5;

Figure 7 is a mapping pattern showing the sequence and spatial relationship of the pixels recorded in accordance with this invention when odd and even numbered pixel patterns are interlaced without compensating for the sagittal cross-line motion of the recording medium;

Figure 8 is another mapping pattern showing the sequence and spatial relationship of the pixels recorded in accordance with this invention when three or more pixel patterns are interlaced without compensating for the sagittal cross-line motion of the recording medium;

Figure 9 is still another mapping pattern showing the sequence and spatial relationship of the pixels recorded in accordance with this invention when odd and even numbered pixel patterns are interlaced and provision is made to compensate completely for the cross-line motion of the recording medium;

Figure 10 is an image plane view of the image deflector for the embodiment shown in Figures 5 and 6 to illustrate how the axis of rotation for the deflector may be tilted to generate a rectangular mapping pattern such as shown in Figure 9; and

Figure 11 is yet another pixel mapping pattern which illustrates the relative ease of adapting the present invention to the printing of hexagonally sampled data.

While the invention is described in some detail hereinbelow with reference to a single illustrated embodiment, it is to be understood that there is no intent to limit it to that embodiment.

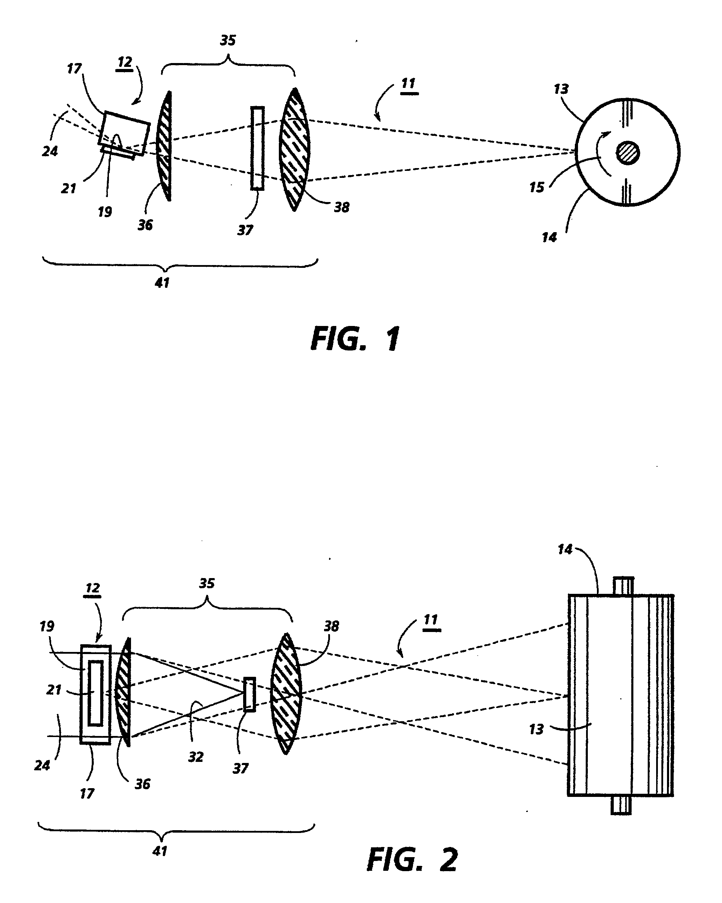

Turning now to the drawings, and at this point especially to Figures 1 and 2, there is a line printer 11 having an electrooptic spatial light modulator 12 for printing an image on a photosensitive recording medium 13. As shown, the recording medium 13 is a photoconductively coated drum 14 which is rotated (by means not shown) in the direction of the arrow 15. Nevertheless, it will be evident that there are other xerographic and non-xerographic recording media that could be used, including photoconductively coated belts and plates, as well as photosensitive films and coated papers. Thus, in the generalized case, the recording medium 13 should be visualized as being a photosensitive medium which is exposed while advancing in a cross-line or line pitch direction relative to the modulator 12.

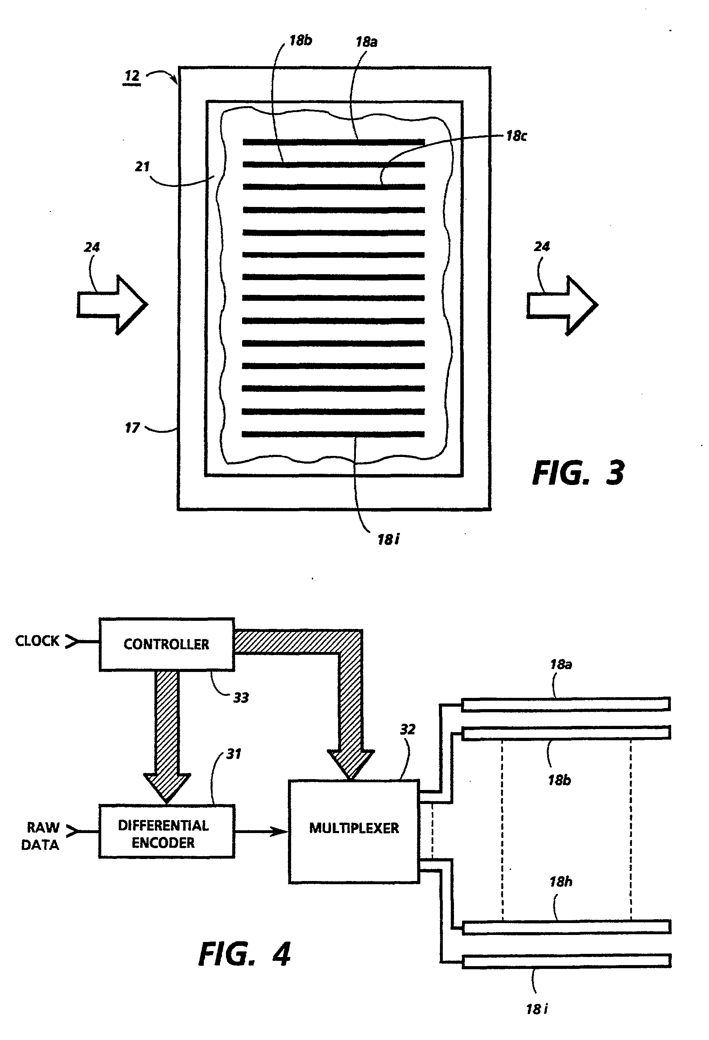

As will be appreciated, the electrooptic spatial light modulator 12 represents one of several discrete image bar technologies with which the present invention may be utilized to advantage. In keeping with standard practices, it comprises an optically transparent electrooptic element 17, such as an optically polished, y-cut crystal of $LiNbO_3$, and a plurality of individually addressable electrodes $18\underline{a}$ - $18\underline{i}$ (Figures 3 and 4). The electrodes $18\underline{a}$ - $18\underline{i}$ are deposited on, or held closely adjacent, a longitudinal, reflective surface 19 of the electrooptic element 17. For example, they may be integrated with their addressing and drive electronics on a VLSI silicon circuit 21, and the modulator 12 may then be assembled so that the electrodes $18\underline{a}$ - $18\underline{i}$ are pressed against the reflective surface 19 (by means not shown). Typically, the electrodes $18\underline{a}$ - $18\underline{i}$ extend lengthwise of the electrooptic element 17 and are distributed widthwise of its reflective surface 19 on more or less uniformly displaced centres.

In operation, a suitable light source, such as a laser (not shown), supplies a transversely collimated light beam 24 which is expanded (by means not shown) if and as required to illuminate substantially the full width of the electrooptic element 17. This light beam is brought to a wedge shaped focus (by means also not shown) at a near grazing angle of incidence on the reflective surface 19 of the electrooptic element 17 and is totally internally reflected therefrom. Successive sets of data samples are sequentially applied to the electrodes $18\underline{a}$ - $18\underline{i}$ whereby the phase front of the light beam 24 is spatially modulated while passing through the electrooptic element 17 in accordance with successive pixel patterns as a function of time.

Advantageously, the data samples are differentially encoded prior to being applied to the electrodes $18\underline{a}$, thereby eliminating the need for ground or reference plane electrodes (not shown). For that reason, as shown in Figure 4 there is an encoder 31 for differentially encoding a serial stream of raw input data samples on a line-by-line basis, a multiplexer 32 for rippling the encoded data samples onto the electrodes $18\underline{a}$ - $18\underline{i}$, and a controller 33 for synchronizing the encoder 31 and the multiplexer 32. As a general rule, the input samples are supplied at a predetermined data rate, so the encoder 31 and the multiplexer 32 characteristically are synchronized by the controller 33 to operate at that rate. However, if a rate change is required, a suitable buffer (not shown) may be used to accommodate it.

A central dark field or central bright field Schlieren imaging system 35 (Figures 1 and 2) converts the phase modulated wavefront of the light beam 24 into a corresponding intensity profile. To accomplish that, a central dark field system suitably includes a field lens 36 for focusing the transversely collimated zero order diffraction components 32 of the light beam 24 (collectively represented by solid line rays in Figure 2) onto an opaque stop 37. The zero order components of the light beam 24 are blocked because the stop 37 is centrally located in the rear focal plane of the field lens 36, but the higher order diffraction components (collectively represented by broken line rays in Figure 2, together with broken line cones for a single pixel) scatter around the stop 37 and are collected by an imaging lens 38 which, in turn, focuses them on the recording medium 13 with a predetermined magnification. Alternatively, a central bright field system (not shown) could be used to perform the conversion process, although it will be understood that such a change would reverse the logical relationship of the individual pixels within the intensity profile to the localized phase modulation of the wavefront of the light beam 24 (i.e. "bright" pixels would become "dark" pixels, and vice-versa, unless steps were taken to account for the reversal in the logical relationship). As will be appreciated, the combination of the electrooptic spatial modulator 12 with the Schlieren imaging system 35 provides a discrete image bar 41.

In accordance with the present invention, the image bar 41 sequentially exposes the recording medium 13 to a plurality of independent pixel patterns which are laterally offset from one another by a distance that is less than the centre-to-centre spacing of the pixels of any one of those patterns, thereby laterally interlacing the pixel patterns. As a result, the spatial addressing capacity of the image bar 41 is increased and the inter-pixel intensity nulls are reduced or even eliminated, thereby enhancing the quality of the image that is obtained.

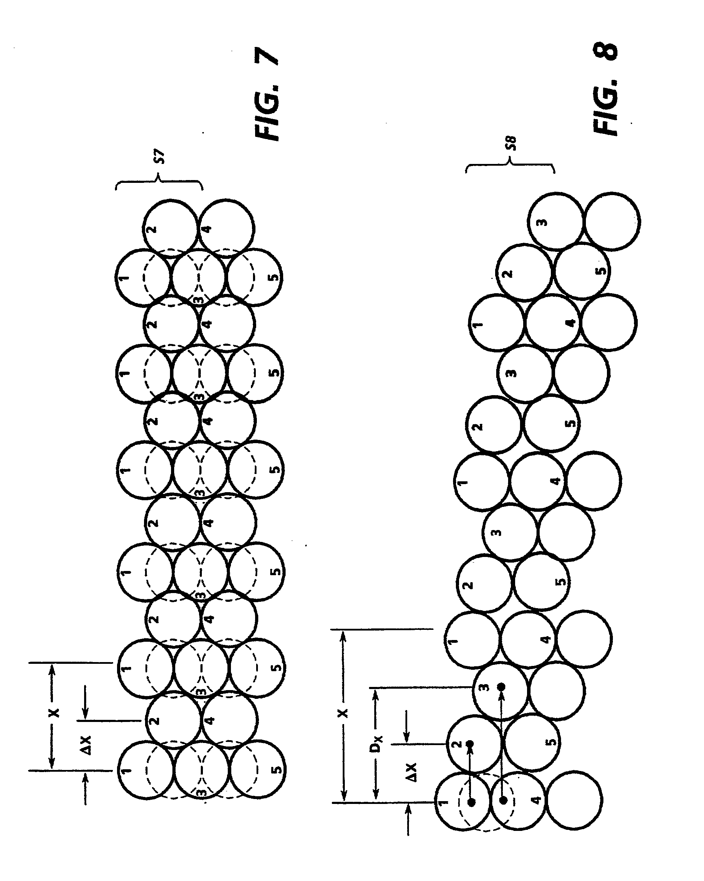

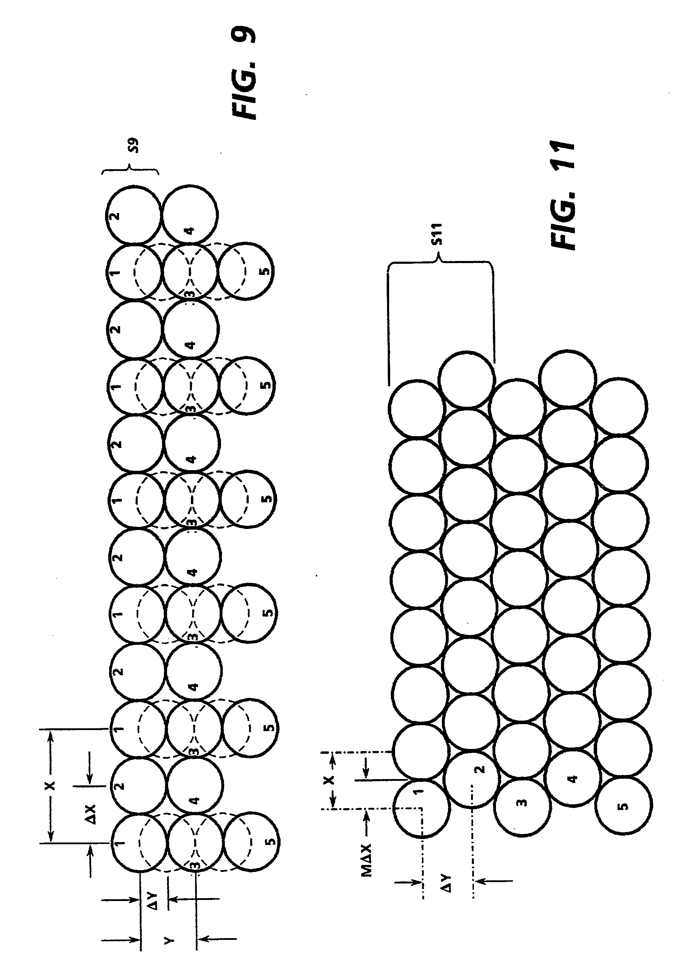

To interlace the pixel patterns, the position of the optical footprint of the image bar 41 is shifted back and forth laterally relative to the recording medium 13 as a function of time, thereby laterally displacing the centres of the pixels of each pattern from those of any immediately preceding and/or immediately following pixel patterns. This interlacing process repeats after every N pixel patterns, where N ≥ 2, so the pixel patterns are laterally interlaced in accordance with a repetitive interlacing pattern (Figures 7, 8 or 9) composed of one or more groups or sets S7 (Figure 7), S8 (Figure 8) and S9 (Figure 9) of N substantially identically interlaced pixel patterns. The lateral offset of the pixel centres within any single group of interlaced pixel patterns S7, S8 or S9 is substantially constant from one pixel pattern to the next. Moreover, it preferably is progressive and unidirectional, so if $N \geq 3$, provision is made for causing the footprint of the image bar 41 to rapidly return or "fly back" to its "home position" at one of its lateral extremes relative to the recording medium 13 whenever it reaches an "end of scan" position at the opposite extreme.

To provide a progressive, unidirectional and substantially constant lateral offset between the pixel centres of N laterally interlaced pixel patterns, the centre-to-centre lateral offset displacement, $\Delta X$, from the pixel centres of one pixel pattern to those of the next is selected so that:

$$\Delta X = X/N \qquad ... (1)$$

where $X$ = the centre-to-centre lateral spacing in the image plane of the pixels of a single pixel pattern (i.e., the "nominal pixel pitch" produced by the image bar 41).

A synchronous line printer exposes the recording medium 13 to successive pixel patterns at a predetermined rate, so the footprint of the image bar 41 may be cyclically shifted back and forth relative to the recording medium 13 of such a printer at a suitable submultiple of that rate. For example, those rates may be selected so that there are two pixel patterns/cycle of the image bar footprint. Equation (1) confirms that the appropriate lateral offset distance, $\Delta X$, for that case is X/2, which will be recognized as being a reasonable approximation of the effective image plane diameter of each pixel printed by an electrooptic image bar. Thus, it will be evident that inter-pixel intensity nulls can be essentially eliminated in electrooptic line printers by laterally interlacing the odd and even numbered (i.e., alternate) pixel paterns.

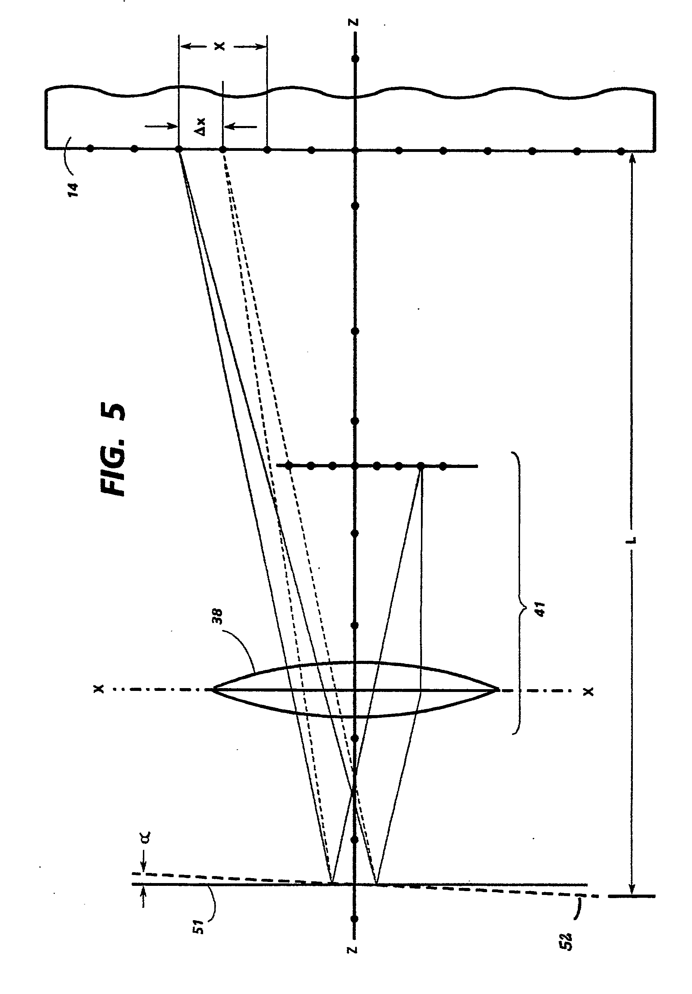

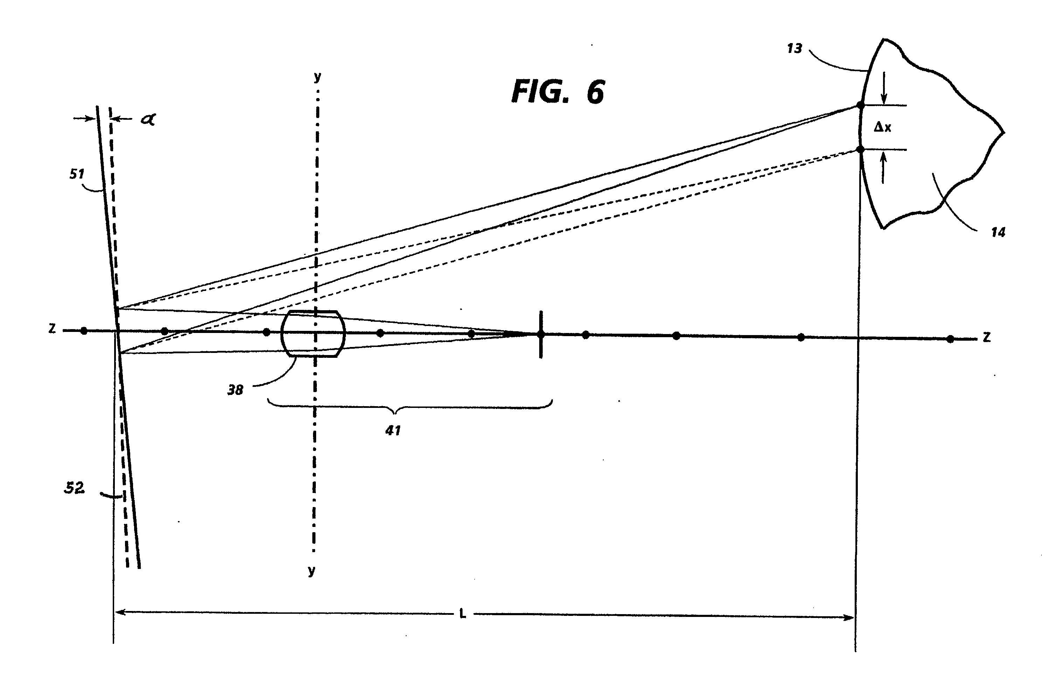

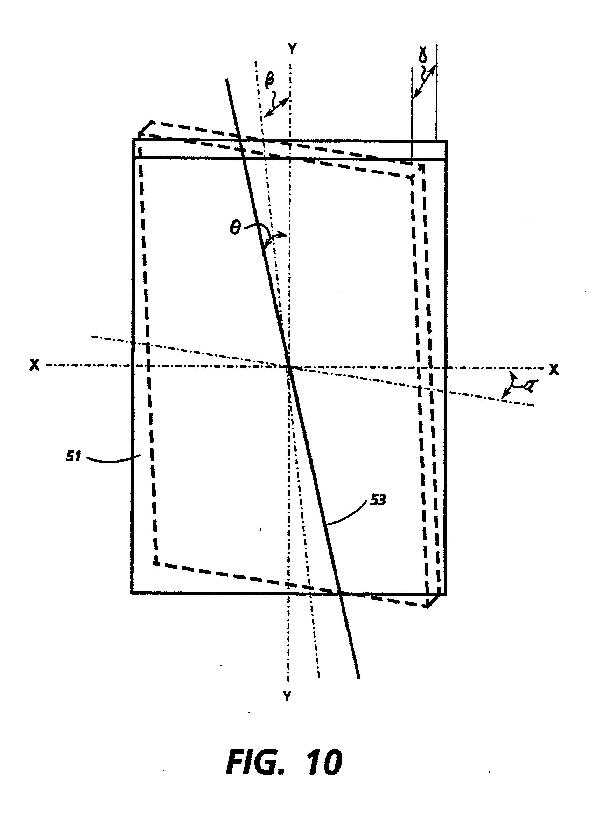

To carry out the invention, as shown in Figures 5 and 6, there is an optical deflector, such as a rotatable mirror 51, located in the optical path between the imaging lens 38 and the recording medium 13. As will be seen, the mirror 51 folds the optical path of the printer 11 about an axis 52 which is substantially aligned with the optical axis of the image bar 41 in the tangential plane, but which is angularly offset therefrom in the sagittal plane, so that the light reflected from the mirror 51 bypasses the imaging lens 38. To laterally shift the footprint of the image bar 41 back and forth with respect to the recording medium 13, the mirror 51 is bidirectionally rotated through a predetermined angle $\gamma$ (Figure 10) about its axis of rotation 53 by suitable drive means (not shown). For example, the mirror 51 may be driven by a fast flyback galvo driver.

More particularly, in keeping with this invention, the rotation of the mirror 51 has a predetermined angular component, $\alpha$, in the tangential plane (Figure 5) to laterally translate the footprint of the image bar 41 back and forth with respect to the recording medium 13 Typically, the angle $\alpha$ is small, so that the footprint of the image bar 41 is laterally translated

through a distance, $D_X$, which is given to a first approximation by:

$$D_X \approx 2L\alpha \qquad ... (2)$$

where $L$ = the optical arm length from the mirror 51 to the recording medium 13.

By substituting the maximum lateral offset distance required, $(N - 1)X/N$, for the distance $D_X$, equation (2) can be rewritten to show that the angle $\alpha$ suitably is selected for the generalized case so that:

$$\alpha \approx (N - 1)X/2NL = (N - 1)\Delta X/2L \qquad ... (3)$$

Equation (3) may, in turn, be solved for one of the more interesting specific cases, where the mirror 51 is rotated back and forth to provide the desired tangential plane rotational component, $\alpha$, once for every two pixel patterns generated by the image bar 41 so that odd and even numbered pixel patterns are interlaced on laterally equidistant centres. It will then be found that an appropriate selection for that case is:

$$\alpha \approx X/4L \qquad ... (4)$$

Referring to Figures 7 and 8, it will be seen that the lateral translation of the footprint of the image bar 41 tends to map the interlaced pixel patterns onto the recording medium 13 in accordance with a diagonal mapping pattern, unless provision is made to compensate for the sagittal cross-line motion of the recording medium 13. To illustrate that point, the pixels of five successive pixel patterns have been sequentially numbered on each of these mapping patterns to indicate the time order in which they are mapped onto the recording medium 13. These mapping patterns do not differentiate among the individual pixels based upon their brightness values, but it will be understood that the brightness of any given pixel is dependant on the image being printed and is either "bright" or "dark" (or, in the case of an analog image bar, of some intermediate brightness value). To avoid any possible confusion, it is noted that the term "pixel" is being used herein to denote a spatially unique sample of an image, regardless of the brightness value that may be assigned to that sample to best represent its information content. The phrase "pixel pattern", on the other hand, is intended to indicate that each pixel has a determinable brightness value.

While a diamond-like (Figure 7) or, more generally, a diagonal (Figure 8) mapping pattern may be suitable for some applications of the present invention, there are other mapping patterns which can be accommodated. For example, a rectangular mapping pattern usually is employed for electronic printing. Accordingly, in keeping with one of the more detailed aspects of this invention, provision can be made for partially or completely compensating for the cross-line motion of the recording medium 13 that occurs while it is being exposed to each set of N laterally interlaced pixel patterns lines. The pixel centres of the corresponding pixel patterns (e.g. the first) of any two successive sets of interlaced pixel patterns are displaced from one another due to the cross-line motion of the recording medium 13 by a distance, Y, which is given by:

$$Y = Nv/r \qquad \dots (5)$$

where: $v$ = the velocity at which the recording medium 13 is advancing in the cross-line direction relative to the image bar 41; and
$r$ = the rate at which the pixel patterns are being generated.

Moreover, the incremental cross-line offset distance, $\Delta y$, between any two successive pixel patterns is given by:

$$\Delta Y = Y/N = v/r \qquad \dots (6)$$

which means that the maximum cross-line translation, $D_y$, that the footprint of the image bar 41 must experience to fully compensate for the cross-line motion of the recording medium 13 is:

$$D_y = (N - 1)\Delta Y = (N - 1)v/r \qquad \dots (7)$$

Accordingly, it will be understood that a generally rectangular mapping pattern is provided if the rotation of the mirror 51 not only involves the aforementioned tangential plane component of rotation, $\alpha$, but also involves a synchronous sagittal plane component of rotation, $\beta$, where for small angles:

$$\beta \approx D_y/2L = (N - 1)v/2rL = (N - 1)\Delta Y/2L \qquad \dots (8)$$

While a dual axis driver, such as a dual axis galvo (not shown), could be employed to synchronously provide appropriate tangential and sagittal components of rotation $\alpha$ and $\beta$, respectively, for the mirror 51, the preferred implementation is to tilt the axis of rotation 53 of the mirror 51 at a predetermined angle $\theta$ (Figure 10) relative to the sagittal plane of the printer 11, where for small sagittal offset or folding angles:

$$\theta \approx \tan^{-1}(D_y/D_x) \approx \tan^{-1}(\beta/\alpha) = \tan^{-1}(\Delta Y/\Delta X) \qquad \dots (9)$$

In that event, the geometrical requirements for a rectangular mapping pattern are substantially satisfied if the angle, y, through which the mirror 51 is rotated back and forth about its axis of rotation 53 is selected so that:

$$y = (\alpha^2 + \beta^2)^{\frac{1}{2}} \qquad \dots (10)$$

As will be appreciated, the pixel densities $d_x$ and $d_y$ along the x and y-axes, respectively, of a rectangular mapping pattern are given by:

$$d_x = N/X = 1/\Delta X \qquad \dots (11)$$

and

$$d_y = 1/Y = 1/N\Delta Y \qquad \dots (12)$$

By definition, a square mapping pattern requires that:

$$d_y/d_x = \Delta X/N\Delta Y = 1 \qquad \dots (13)$$

Thus, equation (6) and (11)-(13) lead to the conclusion that a square mapping pattern having N interlaced pixel patterns per line requires selecting the rate, r, at which the pixel patterns are generated so that:

$$r = N^2v/X \qquad \dots (14)$$

Now, by combining equations (9) and (13) to determine the tilt angle, $\theta$, of the axis of rotation 53 of the mirror 51 that will result in a square mapping pattern, it will be apparent that such a mapping pattern requires that:

$$\theta \approx \tan^{-1}(1/N) \qquad \dots (15)$$

Asynchronous printers and the like may experience significant variations in the velocity, v, at which the recording medium 13 is being advanced, but it will be recognized that the rate, r, at which the pixel patterns are generated may be controlled (by means not shown) if need be to more or less continously compensate for any such variations.

Applying equations (14) and (15) to determine, for example, the rate, r, at which the pixel patterns should be generated and angle, $\theta$, at which the axis of rotation 53 of the mirror 51 should be tilted to obtain a square mapping pattern of alternately interlaced, odd and even numbered pixel patterns, it will be seen that the appropriate selections for that specific case are:

$$r = 4v/X \qquad \dots (16)$$

and

$$\theta \approx \tan^{-1}(1/2) \approx 26.56° \qquad \dots (17)$$

If desired, there may only be partial compensation for the cross-line motion of the recording medium 13. As a general rule, however, the additional cost and complexity of compensating for such motion is difficult to justify if substantially complete compensation is not provided, unless some special recording lattice or pattern is desired.

Hexagonal pixel mapping patterns, such as shown in Figure 11, are a particularly interesting example of the adaptability of the present invention. They are of interest because it has been shown that hexagonal sampling patterns require the least number of samples/unit area to unambiguously characterize a random image. See, D P Peterson and D H Middleton, "Sampling and Reconstruction of Wave-Number Limited Functions in N-Dimensional Euclidean Spaces" Information and Control, Vol. 5. p. 279 (1962). As is known, each pixel of a hexagonal pattern is spatially displaced equidistantly from its nearest neighbouring pixels. Such a mapping pattern can be readily realized in accordance with this invention, without having to compensate for the cross-line motion of the recording medium 13. Indeed, the cross-line motion of the recording medium 13 advantageously is utilized to satisfy the geometric requirements of such a mapping pattern. More particularly, as indicated by the representative set of interlaced pixel patterns, S11, a hexagonal pattern repeats itself once for every two pixel patterns (N = 2) patterns. Thus, from Figure 11 it is clear that if the lateral displacement from one pixel pattern to the next is given by ±ΔX, a hexagonal mapping pattern is provided if the cross-line displacement, ΔY, of successive pixel patterns is selected so that:

$$\Delta Y = |\Delta X|\sqrt{3} \qquad \dots (18)$$

Thus, based on equations (1), (6) and (18) it will be evident that a hexagonal mapping pattern may be generated by an image bar having a predetermined nominal pixel pitch, X, if the lateral displacement, ±ΔX of successive pixel patterns is selected so that:

$$|\Delta X| = X/2 \qquad \dots (19)$$

and if the velocity, v, at which the recording medium is advanced in the cross-line direction and the rate, r, at which the pixel patterns are generated, are selected so that:

$$v = (rX\sqrt{3})/2 \qquad \dots (20)$$

There are, of course, alternative applications for certain of the concepts of the present invention. For example, the sagittal compensation for the cross-line motion of the recording medium 13 might be employed independently to cause overwriting of N successive pixel patterns in registered relationship, such as for writing N colours on a polychromatic recording medium 13 or for recording a N level gray scale image by registereing N successive pixel patterns of progressively increasing or decreasing gray scale value. However, the lateral motion is significant for situations wherein the goal is to provide increased spatial addressing capacity for a discrete image bar being that the addressing capacity or resolution of such an image bar is N times its nominal pixel pitch, X, if the optical footprint of the image bar is laterally shifted for each successive pixel pattern as described hereinabove, As will be understood, the cross-line motion of the recording medium 13 is a relative motion with respect to the image bar 41 which may be introduced in a number of different ways, including by means of a cross-line optical deflection mechanism (not shown).

In view of the foregoing, it will now be understood that the present invention provides a technique for increasing the spatial addressing capacity of discrete image bars. This increased spatial addressing capacity may be used, for example, to increase the resolution of line printers having such image bars, thereby enhancing the quality of the images that are produced. As will be appreciated, the increased spatial addressing capacity that is provided for discrete image bars in accordance with this invention not only reduces their image distorting spatial quantization errors, but also reduces or eliminates unwanted inter-pixel intensity nulls. Moreover, it will be apparent that there are a wide variety of pixel mapping patterns which may be satisfied through the use of the present invention. Furthermore, it will be understood that there are alternative applications for certain aspects of this invention as claimed, including the ability to overwrite successive pixel patterns in registered relationship for colour or gray scale recording in printers or displays.

## Claims

1. Imaging apparatus including a discrete optical image bar (41) for sequentially generating a plurality of independent pixel patterns and for serially superimposing said pixel patterns on an output image plane (14), each of said pixel patterns containing a plurality of pixels which are spatially distributed generally uniformly on said image plane on respective laterally displaced centres; characterised by
means (51) coupled to said image bar for sequentially shifting successive ones of said pixel patterns laterally relative to said image plane while maintaining said image bar in a fixed lateral position with respect to said image plane, each of said pixel patterns having the centres of its pixels laterally offset on said image plane with respect to the centres of the pixels of any immediately preceding and immediately succeeding pixel patterns by a distance that is less than the lateral displacement of the centres of the pixels of any one of said patterns,
whereby spatially adjacent pixel patterns are laterally interlaced while being mapped onto said image plane to increase the spatial addressing capacity of said image bar.

2. The apparatus of claim 1 wherein
the lateral offset distance between the centres of the pixels of said laterally interlaced pixel patterns is substantially constant.

3. The apparatus of claim 1 or claim 2 wherein
said image bar (41) includes an electrooptic spatial light modulator (12) and a Schlieren imaging system (35).

4. The apparatus of any one of claims 1 to 3 wherein a recording medium (14) advances across said image plane in an orthogonal cross-line direction with respect to said image bar while said pixel patterns are being generated, and
said shifting means (51) translate said interlaced pixel patterns in said cross-line direction with respect to said recording medium to at least partially compensate for the cross-line advance of said recording medium.

5. The apparatus of claim 4 wherein
the cross-line translation of said interlaced pixel patterns substantially completely compensates for the cross-line advance of said recording medium so that the centres of the pixels of said interlaced pixel patterns are generally aligned laterally on said recording medium, and the lateral offset distance (X) between the centres of the pixels of said interlaced pixel patterns is substantially constant.

6. The apparatus of any one of claims 1 to 5 wherein
said shifting means (51) laterally shifts said pixel patterns back and forth with respect to said image plane to laterally interlace successive pluralities of pixel patterns on said image plane on a set-by-set basis in accordane with a repetitive interlacing pattern which repeats once for every N pixel patterns, where N ≧ 2 and defines the number of interlaced pixel patterns per set.

7. The apparatus of claim 6 wherein
the lateral offset distance between the centres of the pixels of adjacent pixel patterns within each of said sets and between the centres of the pixels of adjacent pixel patterns of successive ones of said sets is substantially constant.

8. The apparatus of claim 6 wherein
said shifting means (51) laterally shifts odd numbered pixel patterns in one direction relative to said recording medium and even numbered pixel patterns in the opposite direction relative to said recording medium to laterally interlace the centres of their pixels on said recording medium, and
the offset distance between the centres of said interlaced pixel patterns is selected to be equal to approximately one half the displacement distance between the centres of the pixels of any one of said pixel patterns.

9. The apparatus of claim 6 wherein
said recording medium advances in said cross-line direction relative to said image bar (41) at a rate which causes successive pixel patterns to be displaced on said recording medium from one another in said cross-line direction by a distance that is approximately equal to said offset distance (△X) times √3,
whereby said interlaced pixel patterns are mapped onto said recording medium substantially in accordance with a hexagonal mapping pattern.

10. Imaging apparatus including a discrete optical image bar for sequentially generating a plurality of independent pixel patterns and for serially superimposing said pixel patterns on an output image plane which is moving in a cross-line direction relative to said image bar; each of said pixel patterns containing a plurality of pixels which are spatially distributed generally uniformly on said image plane on respective laterally displaced centres; characterised by
means for translating successive pixel patterns in a cross-line direction relative to said image plane to substantially completely compensate for the cross-line motion of said image plane.

11. The apparatus of claim 10 wherein
said means cyclically translates pixel patterns in said cross-line direction once for each set of N successive pixel patterns, where N ≧ 2, thereby providing substantially complete compensate for the cross-line motion of said image plane that occurs while each successive set of pixel patterns is being generated.

## Patentansprüche

1. Abbildungsvorrichtung mit einer diskreten optischen Abbildungsschiene (42) für die Erzeugung einer Vielzahl von unabhängigen Bildpunktmustern nacheinander und für die serielle Überlagerung der Bildpunktmuster auf einer Ausgabebildebene (14), wobei jedes der Bildpunktmuster eine Vielzahl von Bildpunkten enthält, die im wesentlichen gleichförmig auf der Bildebene in jeweiligen seitlich angeordneten Zentren räumlich verteilt sind; gekennzeichnet durch eine mit der Abbildungsschiene verbundene Einrichtung (51) für die sequentielle Verschiebung aufeinanderfolgender Muster der Bildpunktmuster seitlich relativ zu der Bildebene, während die Abbildungsschiene in einer festen seitlichen Position in bezug auf die Bildebene gehalten wird, wobei jedes der Bildpunktmuster die Zentren ihrer Bildpunkte seitlich versetzt auf der Bildebene in bezug auf die Zentren der Bildpunkte von irgendeinem unmittelbar vorangehenden und unmittelbar folgenden Bildpunktmuster in einem Abstand aufweist, der kleiner als die seitliche Entfernung der Zentren der Bildpunkte von irgendeinem der Bildpunktmuster ist, wodurch räumlich benachbarte Bildpunktmuster seitlich durchmischt werden, während sie auf die Bildebene aufgebracht werden, um die räumliche Adressierungskapazität der Abbildungseinrichtung zu erhöhen.

2. Vorrichtung nach Anspruch 1, worin die seitliche Versatzentfernung zwischen den Zentren der Bildpunkte der seitlich durchmischten Bildpunktmuster im wesentlichen konstant ist.

3. Vorrichtung nach Anspruch 1 oder 2, worin die Abbildungsschiene (41) einen elektrooptischen räumlichen Lichtmodulator (12) und ein Schlierenabbildungssystem (35) enthält.

4. Vorrichtung nach wenigstens einem der Ansprüche 1 bis 3, worin ein Aufzeichnungsmedium (14) über die Bildebene in einer senkrechten Querlinienrichtung in bezug auf die Abbildungsschiene fortschreitet, während die Bildpunktmuster erzeugt werden, und die Verschiebungseinrichtung (51) die durchmischten Bildpunktmuster in der Querlinienrichtung in bezug auf das Aufzeichnungsmedium parallel verschiebt, um wenigstens teilweise den Querlinienvorschub des Aufzeichnungsmediums zu kompensieren.

5. Vorrichtung nach Anspruch 4, worin die Querlinienverschiebung der vermischten Bildpunktmuster im wesentlichen vollständig den Querlinienvorschub des Aufzeichnungsmediums kompensiert, so daß die Zentren der Bildpunkte der vermischten Bildpunktmuster im wesentlichen seitlich auf dem Aufzeichnungsmedium ausgerichtet sind, und die seitliche Versatzentfernung zwischen den Zentren der Bildpunkte der vermischten Bildpunktmuster im wesentlichen konstant ist.

6. Vorrichtung nach wenigstens einem der Ansprüche 1 bis 5, worin die Verschiebungseinrichtung die Bildpunktmuster in bezug auf die Bildebene seitlich hin- und herverschiebt, um aufeinanderfolgende Vielzahlen von Bildpunktmustern auf der Bildebene Gruppe für Gruppe entsprechend einem sich wiederholenden Vermischungsmuster, das sich einmal für jede Zahl N von Bildpunktmustern wiederholt, wobei n > 2 ist und die Anzahl von vermischten Bildpunktmuster je Gruppe definiert, seitlich zu vermischen.

7. Vorrichtung nach Anspruch 6, worin die seitliche Versatzentfernung zwischen den Zentren der Bildpunkte von aneinandergrenzenden Bildpunktmustern innerhalb jeder der Gruppen und zwischen den Zentren der Bildpunkte von aneinandergrenzenden Bildpunktmustern von aufeinanderfolgenden von den Gruppen im wesentlichen konstant ist.

8. Vorrichtung nach Anspruch 6, worin die Verschiebungseinrichtung (51) ungerade numerierte Bildpunktmuster in einer Richtung relativ zum Aufzeichnungsmedium seitlich verschiebt und geradzahlig numerierte Bildpunktmuster in der entgegengesetzten Richtung relativ zum Aufzeichnungsmedium verschiebt, um die Zentren ihrer Bildpunkte auf dem Aufzeichnungsmedium seitlich zu vermischen, und die Versatzentfernung zwischen den Zentren der vermischten Bildpunktmuster so ausgewählt ist, daß sie gleich etwa einer Hälfte der Verschiebungsdistanz zwischen den Zentren der Bildpunkte von irgendeinem der Bildpunktmuster ist.

9. Vorrichtung nach Anspruch 6, worin das Aufzeichnungsmedium in der Querlinienrichtung relativ zu der Abbildungsschiene mit einer Geschwindigkeit fortschreitet, welche bewirkt, daß aufeinanderfolgende Bildpunktmuster auf dem Aufzeichnungsmedium auseinander in der Querlinienrichtung um eine Entfernung, die ungefähr gleich der Versatzentfernung mal √3 ist, verschoben werden, wobei die vermischten Bildpunktmuster auf das Aufzeichnungsmedium im wesentlichen entsprechend einem hexagonalen Aufzeichnungsmuster aufgebracht werden.

10. Abbildungsvorrichtung mit einer diskreten optischen Abbildungsschiene für die aufeinanderfolgende Erzeugung einer Vielzahl von unabhängigen Bildpunktmustern und für die serielle Überlagerung der Bildpunktmuster auf einer Ausgabebildebene, welche sich in einer Querlinienrichtung relativ zu der Abbildungsschiene bewegt, wobei jedes der Bildpunktmuster eine Vielzahl von Bildpunkten enthält, welche räumlich im wesentlichen gleichmäßig auf der Bildebene auf jeweiligen seitlich angeordneten Zentren verteilt sind; gekennzeichnet durch eine Einrichtung zum Verschieben aufeinander folgender Bildpunktmuster in einer Querlinienrichtung relativ zur Bildebene, um im wesentlichen vollständig die Querlinienbewegung der Bildebene zu kompensieren.

11. Vorrichtung nach Anspruch 10, worin die Einrichtung Bildpunktmuster in der Querlinienrichtung einmal für jede Gruppe von N aufeinander folgenden Bildpunktmustern zyklisch parallel verschiebt, wobei N > 2 ist, um dadurch im wesentlichen eine komplette Kompensation für die Querlinienbewegung der Bildebene zu schaffen, die auftritt, während jede aufeinanderfolgende Gruppe von Bildpunktmustern erzeugt wird.

## Revendications

1. Dispositif d'imagerie comportant une barre-image optique discrète (41) pour générer séquentiellement une multitude de motifs indépendants de pixels et pour superposer sériellement les motifs de pixels sur un plan-image de sortie (14), chacun des motifs de pixels contenant une multitude de pixels qui sont distribués spatialement de façon généralement uniforme sur le plan-image sur des centres respectifs déplacés latéralement, caractérisé par :
- un moyen (51) accouple à la barre-image pour décaler séquentiellement des motifs de pixels successifs dans le sens latéral par rapport au plan-image tout en maintenant la barre-image dans une position latérale fixe par rapport au plan-image, chacun des motifs de pixels ayant les centres de ces pixels décalés latéralement sur le plan-image par rapport aux centres des pixels de n'importe quel motif de pixels immédiatement précédents et immédiatement suivants selon une distance qui est inférieure au déplacement latéral des centres des pixels de l'un quelconque des motifs de pixels, d'où il résulte que des motifs de pixels spatialement adjacents sont entrelacés latéralement tout en étant mappés sur le plan-image pour augmenter la capacité d'adressage spatial de la barre-image.

2. Dispositif selon la revendication 1, dans lequel :
- la distance du décalage latéral entre les centres des pixels de motifs de pixels entrelacés latéralement est sensiblement constante.

3. Dispositif selon la revendication 1 ou la revendication 2, dans lequel :
- la barre-image (41) comporte un modulateur électro-optique (12) de lumière spatiale et un système (35) d'imagerie Schlieren.

4. Dispositif selon l'une quelconque des revendications 1 à 3, dans lequel un support d'enregistrement (14) avance à travers le plan-image dans une direction orthogonale aux lignes transversales par rapport à la barre-image alors qu'il y a génération des motifs de pixels, et
- le moyen de décalage (51) fait subir une translation aux motifs entrelacés des pixels dans une direction transversale aux lignes par rapport au support d'enregistrement pour compenser au moins partiellement l'avance transversale aux lignes du milieu d'enregistrement.

5. Dispositif selon la revendication 4, dans lequel :
- la translation transversalement aux lignes des motifs entrelacés des pixels compense de façon pratiquement complète l'avance transversalement aux lignes du support d'enregistrement de sorte que les centres des pixels des motifs entrelacés des pixels sont généralement alignés latéralement sur le milieu d'enregistrement; et
- la distance du décalage latéral entre les centres des pixels des motifs entrelacés de pixels est sensiblement constante.

6. Dispositif selon l'une quelconque des revendications 1 à 5, dans lequel :
- le moyen de décalage décale latéralement les motifs de pixels dans un va-et-vient par rapport au plan image de manière à entrelacer latéralement des pluralités successives de motifs de pixels sur le plan-image sur une base jeu par jeu en conformité avec un motif d'entrelacement répétitif qui se répète une fois tous les N motifs de pixels, où N ≥ 2 et définit le nombre des motifs entrelacés de pixels par jeu.

7. Dispositif selon la revendication 6, dans lequel :

- la distance du décalage latéral entre les centres des pixels de motifs adjacents de pixels à l'intérieur de chacun des jeux et entre les centres des pixels de motifs adjacents de pixels successifs des jeux est sensiblement constante.

8. Dispositif selon la revendication 6, dans lequel :

- le moyen de décalage (51) décale latéralement les motifs de pixels de numéro impair dans une direction par rapport au milieu d'enregistrement et les motifs de pixels de numéro pair dans la direction opposée par rapport au support d'enregistrement de manière à entrelacer latéralement les centres de leurs pixels sur le support d'enregistrement, et

- la distance de décalage entre les centres des motifs entrelacés de pixels est choisie de manière à être égale à approximativement la moitié de la distance de déplacement entre les centres des pixels de l'un quelconque des motifs de pixels.

9. Dispositif selon la revendication 6, dans lequel :

- le support d'enregistrement avance dans une direction transversale aux lignes par rapport à la barre-image à une cadence qui a pour effet que les motifs successifs de pixels sont déplacés sur le support d'enregistrement les uns par rapport aux autres dans une direction transversale aux lignes suivant une distance qui est approximativement égale à la distance de décalage √3,

- à la suite de quoi les motifs entrelacés de pixels sot mappés sur le support d'enregistrement en étant sensiblement en conformité avec un motif hexagonal de mappage.

10. Dispositif d'imagerie comprenant une barre-image optique discrète pour générer séquentiellement une multitude de motifs de pixels indépendants et pour superposer en série les motifs de pixels sur un plan-image de sortie qui est mobile dans une direction transversale aux lignes par rapport à la barre-image, chacun des motifs de pixels contenant une multitude de pixels qui sont répartis spatialement de façon généralement uniforme sur le plan-image sur des centres respectifs déplacés latéralement, caractérisé par :

- un moyen pour faire subir une translation aux motifs successifs de pixels dans une direction transversale aux lignes par rapport au plan-image de manière à compenser de façon pratiquement complète le mouvement transversal aux lignes du plan-image.

11. Dispositif selon la revendication 10, dans lequel :

- le moyen fait subir une translation cyclique aux motifs des pixels dans la direction transversale aux lignes une fois par jeu de N motifs successifs de pixels, où N ≥ 2, d'où il résulte la fourniture d'une compensation sensiblement complète du mouvement transversal aux lignes du plan-image se produisant alors que chaque jeu successif de motifs de pixels est généré.

**FIG. 1**

**FIG. 2**

**FIG. 3**

**FIG. 4**

**FIG. 5**

EP 0 202 088 B1

FIG. 6

FIG. 7

FIG. 8

FIG. 9

FIG. 11

**FIG. 10**